# EUROPÄISCHE PATENTSCHRIFT

(11) **EP 0 646 408 B1**
(45) Veröffentlichungstag und Bekanntmachung des Hinweises auf die Patenterteilung: **01.12.1999**
(21) Anmeldenummer: 93810701.8
(22) Anmeldetag: 05.10.1993
(51) Int. Cl.: B01F 5/06

(54) **Vorrichtung zum Homogenisieren von hochviskosen Fluiden**
Device for homogenising very viscous liquids
Dispositif pour homogéniser des liquides très visqueux

(43) Veröffentlichungstag der Anmeldung: 05.04.1995
(73) Patentinhaber: Sulzer Chemtech AG, CH-8404 Winterthur (CH)
(72) Erfinder: Signer, Arno, CH-8400 Wintherthur (CH)
(74) Vertreter: Hammer, Bruno, Dr.

(56) Entgegenhaltungen:
- CH-A- 564 966
- DE-A- 1 807 922
- FR-A- 606 324
- FR-A- 1 319 212
- GB-A- 2 020 987
- US-A- 2 584 827
- US-A- 4 747 697

## Beschreibung

Die Erfindung betrifft eine Vorrichtung zum Homogenisieren von hochviskosen Fluiden gemäss Oberbegriff von Anspruch 1 sowie Verwendungen einer derartigen Vorrichtung.

Beim Extrudieren und Spritzgiessen von Thermoplasten werden mittels statischen Mischern homogene - insbesondere thermisch homogene - Schmelzen hergestellt. Ohne besondere Massnahmen weisen Kunststoffschmelzen in Plastifiziermaschinen nach Austritt aus der Schnecke starke Temperaturunterschiede auf; bei Zugabe von Farbstoffen und/oder Additiven ist auch deren Verteilung ungleichmässig. Bei Spritzgiessmaschinen gewinnt man durch Einbau eines Mischkopfes in die Düse die nötige Homogenität der Kunststoffschmelze. (Siehe z.B. G.Schneider und R.Maurer, Österr.Kunststoff-Zeitschrift, 1985, Seiten 86-89.)

Ein Mischkopf oder Schmelzemischer besteht aus einer Hülse, in der mehrere Mischelemente angeordnet sind. Wegen der hohen Viskosität der Kunststoffschmelze wirken grosse Kräfte auf die Mischelemente sowie zwischen den Mischelementen und der Hülse. Bei einer vorteilhaften Ausführungsform des Mischkopfes liegen die Mischelemente in Form eines monolithischen (d.h. ohne Fügestellen zusammenhängenden) Gussstückes vor, das in die Hülse eingelötet ist. Ein derartiger Mischkopf weist allerdings den Nachteil auf, dass bei Extrembedingungen die Lötverbindungen unter Umständen nicht standhalten. Solche Extrembedingungen, die bei fehlerhafter Bedienung auftreten können, sind beispielsweise: Kaltstart (mit einem Spitzendruck von rund 2000 bar), schnelles Aufheizen, Reinigen mit offener Flamme, Abschrecken bei Glühtemperatur mit Wasser.

Aufgabe der Erfindung ist, eine Vorrichtung zum Homogenisieren von hochviskosen Fluiden - beispielsweise einen Mischkopf oder Schmelzemischer - zu schaffen, die bei Extrembedingungen möglichst unzerstörbar ist. Eine solche Vorrichtung soll auch gut reinigbar sein. Ferner soll die Vorrichtung nebst statischen Mischelementen gegebenenfalls auch ein Filterelement, beispielsweise ein Kammfilter, umfassen. In Anspruch 1 sind die kennzeichnenden Merkmale aufgeführt, durch welche die erfindungsgemässe Lösung der Aufgabe gegeben ist. Dabei soll unter "monolithischem Bauteil" ein Bauteil verstanden werden, das keine Schwächungen durch Fügestellen - beispielsweise Lötverbindungen - aufweist (wobei hingegen ein Bauteil mit Schweissverbindungen monolithisch sein kann).

Die abhängigen Ansprüche 2 bis 8 beziehen sich auf vorteilhafte Ausführungsformen der erfindungsgemässen Vorrichtung. Der unabhängige Anspruch 9 bezieht sich auf Verwendungen dieser Vorrichtung.

Nachfolgend wird die Erfindung anhand der Zeichnungen näher erläutert. Es zeigen:
- Fig. 1: Querschnitt durch die Düse einer Spritzgiessmaschine mit Mischkopf bekannter Bauart,
- Fig. 2: erfindungsgemässer Mischkopf,
- Fig. 3: Mischelement einer erfindungsgemässen Vorrichtung,
- Fig. 4: zweites Ausführungsbeispiel eines erfindungsgemässen Mischelements,
- Fig. 5: Querschnitt durch Mischelement der Fig.4,
- Fig.6,7: weitere Varianten von Mischelementen,
- Fig. 8: Kammfilterelement zur erfindungsgemässen Vorrichtung und
- Fig. 9: monolithisches Bauteil der erfindungsgemässen Vorrichtung mit zwei Mischelementen.

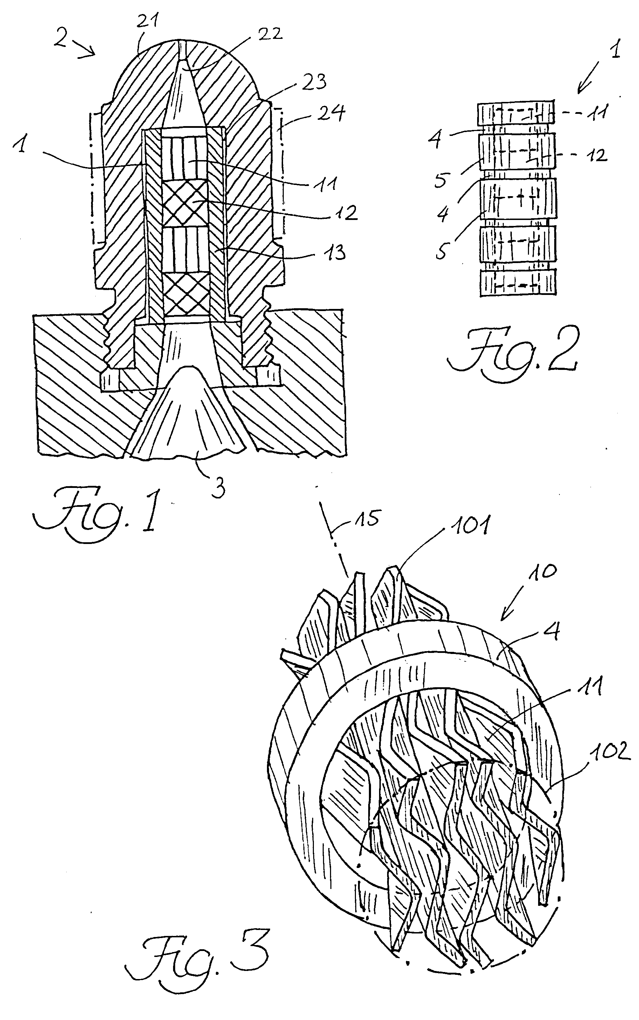

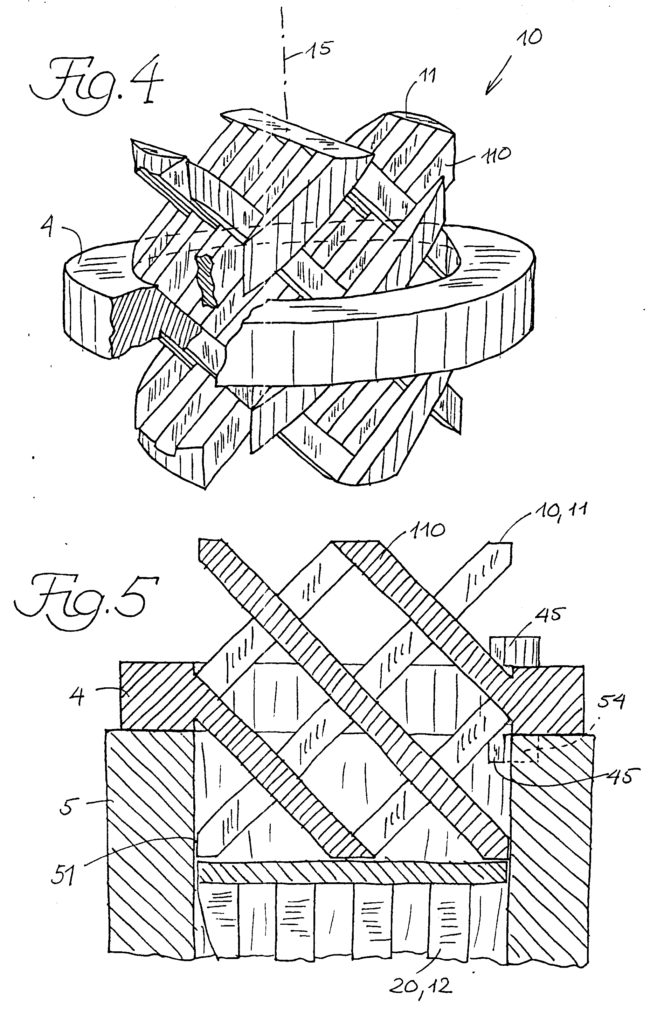

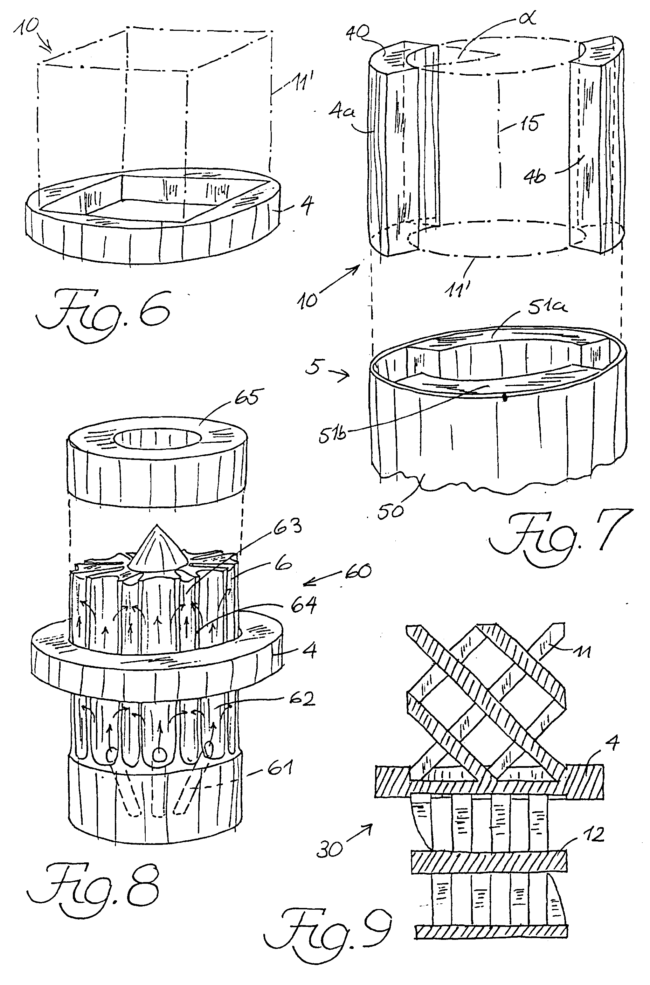

Die Düse 2 der Fig.1 zeigt folgende Komponenten: Mischkopf 1 mit Mischelementen 11, 12 und Hülse 13; Düsenkopf 21 mit Düsenöffnung 22 und Bohrung 23 für den Mischkopf 1; strichpunktiert angedeutet ein Heizband 24; ferner die Spitze einer Extruderschnecke 3. Die Fig.2 zeigt die Seitenansicht eines erfindungsgemässen Mischkopfes 1, der nicht wie bei der bekannten Bauart eine einteilige Hülse 13 aufweist, sondern eine mehrteilige Hülse, welche die Teile 4 und 5 umfasst. Der Teil 4 bildet zusammen mit dem Mischelement 11 ein monolithisches Bauteil 10. Fig.3 zeigt ein erstes Beispiel: Der Teil 4 ist eine flanschartige Partie des Bauteils 10, mit welchem dieses zwischen den Hülsenteilen 5 verankert wird. Er ist ringförmig und senkrecht zur Hülsenachse 15 liegend ausgebildet; er ist im gezeigten Beispiel in der Mitte des Mischelements 11 angeordnet. Das Mischelement 11 ist aus Lagen 101 gefalteter Lamellen aufgebaut, zwischen denen aufgrund der Faltung Kanäle liegen, die sich offen kreuzen. Durch den strichpunktiert gezeichneten Kreis 102 ist die äussere Kontur der Stirnseite angedeutet.

Das monolithische Bauteil 10 der Fig.4 zeigt ebenfalls eine flanschartige Partie 4, die ringförmig ist und sich in der Mitte des Mischelements 11 befindet. Die Flanschpartie 4 ist aufgebrochen dargestellt, damit das Merkmal des Bauteils 10, monolithisch zu sein, sichtbar ist. Das Mischelement 11 umfasst eine Vielzahl von lagenweise angeordneten Stegen 110. Die Stege 110 benachbarter Lagen kreuzen sich; sie schliessen inbezug auf die Hülsenachse 15 einen Winkel von 45° ein. (Dieser Winkel kann auch Werte zwischen 10° und 70° annehmen.)

Die Fig.5 zeigt als Querschnitt das Bauteil 10 der Fig.4, einen Abschnitt eines rohrförmigen Hülsenteils 5 und ein zum Bauteil 10 benachbartes Bauteil 20 mit dem Mischelement 12. Zwischen dem Hülsenteil 5 und den Stegen 110 kann ein Spalt 51 vorgesehen sein. Der äussere Durchmesser des Hülsenteils 5 und jener des Rings 4 können - anders als dargestellt - selbstverständlich auch gleich gross sein. Auf dem Ring 4 sind Nocken 45 und entsprechend im Hülsenteil 5 Aussparungen 54 vorgesehen, mittels derer eine feste Ausrichtung des Bauteils 10 gegenüber dem benachbarten Bauteil 20 vorgebbar ist.

Die Bauteile 10 und Hülsenteile 5 werden lediglich zusammengesteckt (Verbindungen zwischen den Teilen aufgrund von Formschluss). Die Teile lassen sich somit einfach wieder voneinander trennen, womit auch die Forderung an die erfindungsgemässe Vorrichtung, gut reinigbar zu sein, erfüllt ist.

Fig.6 zeigt eine Variante des Bauteils 10, bei der das strichpunktiert angedeutete Mischelement 11' würfel- oder quaderförmig ist.

Beim Bauteil 10 der Fig.7 bilden zwei Rippen 4a und 4b die Verankerung in der Hülse. Die Stirnfläche 140 ist ein Kreisringsektor, der innerhalb des zentralen Winkels Á liegt (mit Hülsenachse 15 als Zentrum). Der Betrag dieses Winkels ist beispielsweise 60°. Dem Bauteil 10 lässt sich ein Hülsenteil 5 zuordnen, bestehend aus einem dünnwandigen Rohr 50 und zwei Teilen 51a und 51b, die auf den Raum zwischen den Rippen 4a und 4b passend ausgebildet sind.

Enthält die zu homogenisierende Schmelze Verunreinigungen in Form von Partikeln, so empfiehlt es sich, in der erfindungsgemässen Vorrichtung zusätzlich ein Filterelement vorzusehen. Ein Beispiel für ein solches Filterelement - nähmlich ein Kammfilter 6 - ist in Fig.8 abgebildet. Über Zuführkanäle 61 gelangt die Schmelze in die axialen Verteilkanäle 62 und von dort über die Kämme 64 in die Sammelkanäle 63. Die Kämme 64 bilden zusammen mit nicht dargestellten Hülsenteilen Engpässe, durch welche die Schmutzpartikel in den Verteilkanälen 62 zurückgehalten werden. Durch den Ring 65 werden die Kanäle 62 stirnseitig abgeschlossen; die Kanäle 63 bleiben teilweise offen, sodass die Schmelze beispielsweise in nachgeschaltete Mischelemente weiterfliessen kann. Das Filterelement 6 und der Ring 4 bilden auch hier ein monolithisches Bauelement 60.

Fig.9 zeigt schliesslich, dass jeweils zwei benachbarte Mischelemente 11 und 12 zu einem monolithischen Bauelement 30 zusammengefasst werden können. Dieses Elementepaar hat eine gemeinsame flanschartige Partie 4, mit der für eine Verankerung zwischen Hülsenteilen gesorgt wird.

Mit Vorteil werden die monolithischen Bauteile 10, 20, 30, 60 inbezug auf die Verwendung als Mischkopf oder Schmelzemischer aus einer metallischen Legierung mittels Präzisionsguss (vorzugsweise) oder auch Sinterspritzguss hergestellt. Für andere Verwendungen kann es empfehlenswert sein, diese Bauteile aus einem keramischen Material oder aber auch aus Kunststoff zu fertigen.

## Patentansprüche

1. Vorrichtung zum Homogenisieren von hochviskosen Fluiden mit Vorrichtungselementen (11, 12, 6), die statische Mischelemente (11, 12) und gegebenenfalls Filterelemente (6) umfassen, wobei die Vorrichtungselemente in einer Hülse (13) längs der Hülsenachse (15) angeordnet sind und die Mischelemente eine Vielzahl von geraden Kanälen umfassen, die sich jeweils mit benachbarten Kanälen offen kreuzen,
dadurch gekennzeichnet, dass die Hülse mehrteilig ausgebildet ist, dass die Vorrichtungselemente monolithische Bauteile (10, 20; 60) sind und dass alle oder eine Mehrzahl der Vorrichtungselemente ring-, nasen- oder rippenartige Partien (4; 4a, 4b) aufweisen, die jeweils einen Teil eines Hülsenabschnittes bilden, der das Vorrichtungselement unmittelbar umgibt, und die dabei verankernd in den Hülsenbereich zwischen zusätzlichen Hülsenteilen (5) eingreifen.

2. Vorrichtung nach Anspruch 1, dadurch gekennzeichnet, dass die ringförmige Partie (4) senkrecht zur Hülsenachse (15) liegend ausgebildet ist.

3. Vorrichtung nach Anspruch 2, dadurch gekennzeichnet, dass jeweils die ringförmige Partie (4) im Mittenbereich bei allen oder einzelnen der monolithischen Bauteile (10, 20; 60) angeordnet ist.

4. Vorrichtung nach einem der Ansprüche 1 bis 3, dadurch gekennzeichnet, dass jeweils mindestens eine Rippe (4a, 4b) eine nasenartige Partie bei allen oder einzelnen der monolithischen Bauteile (10) ausgebildet ist, wobei die Rippe zur Hülsenachse (15) parallel verläuft.

5. Vorrichtung nach einem der Ansprüche 1 bis 4, dadurch gekennzeichnet, dass die Mischelemente (11, 12) eine Vielzahl von lagenweise angeordneten Stegen (110) umfassen, wobei die Stege benachbarter Lagen sich kreuzen und die Stege inbezug auf die Hülsenachse (15) einen einheitlichen Winkel zwischen 10° und 70°, vorzugsweise 45°, einschliessen.

6. Vorrichtung nach einem der Ansprüche 1 bis 5, dadurch gekennzeichnet, dass die monolithischen Bauteile (10, 20; 60) aus einer metallischen Legierung bestehen und durch Präzisionsguss oder Sinterspritzguss hergestellt sind.

7. Vorrichtung nach einem der Ansprüche 1 bis 5, dadurch gekennzeichnet, dass die monolithischen Bauteile (10, 20; 60) aus keramischem Material bestehen.

8. Vorrichtung nach einem der Ansprüche 1 bis 5, dadurch gekennzeichnet, dass die monolithischen Bauteile (10, 20; 60) aus Kunststoff bestehen.

9. Verwendung der Vorrichtung nach einem der Ansprüche 1 bis 6 als Mischkopf (1) in der Düse einer Spritzgiessmaschine oder als Schmelzemischer nach der Schnecke eines Extruders.

## Claims

1. A device for homogenising very viscous liquids, having elements of the device (11,12,6) which encompass static mixing elements (11,12) and likewise filter elements (6), and where the elements of the device are arranged in a casing (13) and the mixing elements encompass a plurality of straight channels which respectively openly cross neighbouring channels,
characterised in that the casing is constructed multi-sectionally, that the elements of the device are monolithic structural members (10,20,60), and that all or a plurality of the elements of the device have ring-like, nose-like or rib-like parts (4,4a,4b) which respectively form a part of the casing section which directly envelopes the element of the device, and which thereby engage anchorage-wise with the casing area between the additional casing members (5).

2. A device according to claim 1, characterised in that the ring-like part (4) is constructed lying perpendicular to the casing axis (15).

3. A device according to claim 2, characterised in that the ring-like part (4) is arranged in the central area in all or in individual monolithic structural members (10,20,60).

4. A device according to any of claims 1-3, characterised in that respectively at least one rib (4a,4b) is constructed as a nose-like part in all or in individual monolithic structural members (10), whereby the ribs extend parallel to the casing axis (15).

5. A device according to any of claims 1-4, characterised in that mixing elements (11,12) encompass a plurality of position-wise arranged rods (110), whereby the rods of neighbouring positions cross over one another and the rods form a uniform angle of between 10° and 70°, preferably of 45° to casing axis (15).

6. A device according to any of claims 1-5, characterised in that the monolithic structural members (10,20,60) are comprised of a metallic alloy and are produced by precision casting or by sinter injection moulding.

7. A device according to any of claims 1-5, characterised in that the monolithic structural members (10,20,60) are comprised of ceramic material.

8. A device according to any of claims 1-5, characterised in that the monolithic structural members (10,20,60) are comprised of synthetic material.

9. Use of the device according to any of claims 1-6 as a mixing head (1) in the nozzle of an injection moulding machine or as a liquified material mixer for the helix of an extruder.

## Revendications

1. Dispositif pour l'homogénéisation de liquides très visqueux avec des éléments de dispositif (11, 12, 6) qui comportent des éléments de mélange statiques (11, 12) et le cas échéant des éléments filtrants (6), ou les éléments de dispositif sont disposés dans un manchon (13) le long de l'axe de manchon (15) et les éléments de mélange comprennent une pluralité de canaux droits qui se croisent ouvertement respectivement avec des canaux avoisinants, caractérisé en ce que le manchon est réalisé en plusieurs parties, en ce que les éléments de dispositif sont des pièces de construction monolithes (10, 20 ; 60) et en ce que tous les éléments de dispositif ou une pluralité de ceux-ci présentent des parties annulaires, en forme d'ergot ou de nervure (4 ; 4a, 4b) qui forment respectivement une partie d'un tronçon de manchon qui entoure l'élément de dispositif directement et qui, ce faisant, s'engage à la manière d'une ancre dans la zone de manchon entre les parties de manchon additionnelles (5).

2. Dispositif selon la revendication 1, caractérisé en ce que la partie annulaire (4) est réalisée pour s'étendre perpendiculairement à l'axe de manchon (15).

3. Dispositif selon la revendication 2, caractérisé en ce que respectivement la partie annulaire (4) est disposée dans la zone centrale dans toutes les pièces de construction monolithes (10, 20 ; 60) ou dans certaines de celles-ci.

4. Dispositif selon l'une des revendications 1 à 3, caractérisé en ce qu'il est réalisé au moins respectivement une nervure (4a, 4b) ou une partie en forme d'ergot dans toutes les pièces de construction monolithes (10) ou dans certaines de celles-ci, où la nervure s'étend parallèlement à l'axe de manchon (15).

5. Dispositif selon l'une des revendications 1 à 4, caractérisé en ce que les éléments de mélange (11, 12) comprennent une pluralité de barrettes (110) disposées par couches, où les barrettes de couches avoisinantes se croisent, et où les barrettes, par rapport à l'axe de manchon (15), forment un angle unitaire entre 10° et 70°, de préférence de 45°.

6. Dispositif selon l'une des revendications 1 à 5, caractérisé en ce que les pièces de construction monolithes (10, 20 ; 60) sont constituées d'un alliage métallique et sont fabriquées par une coulée de précision ou par un moulage par frittage par projection.

7. Dispositif selon l'une des revendications 1 à 5, caractérisé en ce que les pièces de construction monolithes (10, 20 ; 60) sont réalisées en matière synthétique.

8. Dispositif selon l'une des revendications 1 à 5, caractérisé en ce que les pièces de construction monolithes (10, 20 ; 60) sont constituées de matière synthétique.

9. Utilisation du dispositif selon l'une des revendications 1 à 6 comme tête de mélange (1) dans la buse d'une machine de moulage par injection ou comme mélangeur de masses fondues à la suite de la vis d'une extrudeuse.
